# EUROPÄISCHE PATENTSCHRIFT

(11) **EP 3 720 680 B1**
(45) Veröffentlichungstag und Bekanntmachung des Hinweises auf die Patenterteilung: **13.10.2021**
(21) Anmeldenummer: 18793636.4
(22) Anmeldetag: 24.10.2018
(51) Int. Cl.: B29C 45/76, B29C 48/40, B29C 48/92

(54) **TECHNIK ZUR ÜBERWACHUNG EINES EXTRUDERS BZW. EINER SPRITZGIESSMASCHINE**
TECHNOLOGY FOR MONITORING AN EXTRUDER OR AN INJECTION MOLDING MACHINE
TECHNIQUE POUR SURVEILLER UNE EXTRUDEUSE OU UNE MACHINE DE MOULAGE PAR INJECTION

(30) Priorität: 08.12.2017 DE 102017129232
(43) Veröffentlichungstag der Anmeldung: 14.10.2020
(73) Patentinhaber: KraussMaffei Technologies GmbH, 80997 München (DE)
(72) Erfinder: SKRABALA, Otto, 78250 Tengen (DE)
(74) Vertreter: Krauss, Philipp
(86) Internationale Anmeldenummer: PCT/EP2018/079154
(87) Internationale Veröffentlichungsnummer: WO 2019/110194

(56) Entgegenhaltungen:
- DE-A1-102011 103 810
- US-A1- 2005 214 419
- C. SKLARCZYK ET AL: "Radar sensor for monitoring the injection moulding processes", PROCEEDINGS OF SPIE, Bd. 5770, 9. Mai 2005 (2005-05-09), Seite 24, XP055541311, 1000 20th St. Bellingham WA 98225-6705 USA ISSN: 0277-786X, DOI: 10.1117/12.598766 ISBN: 978-1-5106-2099-5

## Beschreibung

Die vorliegende Erfindung betrifft die Gebiete der Extrusion und des Spritzgießens. Konkret wird eine Technik zur Überwachung eines im Betrieb befindlichen Extruders oder einer im Betrieb befindlichen Spritzgießmaschine bereitgestellt.

Extrusions- und Spritzgussverfahren finden seit langem Anwendung in der industriellen Herstellung von Formteilen, insbesondere von Kunststoffformteilen. Im Bereich der Extrusion können hierbei Einschneckenextruder, Doppelschneckenextruder oder Mehrschneckenextruder zum Einsatz kommen. Beiden Verfahren ist gemeinsam, dass das zu verarbeitende Kunststoffmaterial in einem Extruder oder in einer Spritzgießmaschine durch Erhöhung von Temperatur und Druck aufgeschmolzen und verdichtet wird und so in einen plastifizierten (also verformbaren) Zustand überführt wird. Das plastifizierte Kunststoffmaterial wird anschließend durch eine Düse gepresst. Der Unterschied zwischen Extrusion und Spritzguss liegt im Wesentlichen in der Methode der Formgebung der Formteile. Bei der Extrusion wird das plastifizierte Kunststoffmaterial durch eine formgebende Düse (Matrize) oder Werkzeug gepresst. Das so erhaltene extrudierte Formteil weist im Querschnitt die Form der eingesetzten Düse auf. Beim Spritzguss wird hingegen das plastifizierte Kunststoffmaterial in einen Hohlraum eines Spritzgusswerkzeugs gespritzt. Das erzeugte Spritzgussformteil weist somit die Form des Hohlraums des Spritzgusswerkzeugs auf.

Zur Überprüfung einer korrekten Verfahrensführung bei der Herstellung von Kunststoffformteilen mittels Extruder bzw. Spritzgießmaschine kommen heutzutage bereits unterschiedlichste Messsysteme zum Einsatz, die Prozessparameter, wie beispielsweise den Druck und die Temperatur des im Extruder bzw. in der Spritzgießmaschine aufgenommenen und zu verarbeitenden Kunststoffmaterials überwachen. Bekannte Messsysteme umfassen Kontaktthermometer und Drucksensoren, die dazu ausgebildet sind, die Temperatur und den Druck des zu verarbeitenden Materials in der Einzugszone, Kompressionszone bzw. Aufschmelzzone und Ausstoßzone des Extruders zu überwachen.

Aus der Dissertation von Heinrich Hörmann mit dem Titel "Theoretische und experimentelle Betrachtung schnelllaufender Einschneckenextruder", Universität Paderborn 2014, ist ferner der Einsatz von Drucksensoren bekannt, um bei konventionellen Schneckenextrudern den Plastifizierzustand zu messen. Dabei werden Druckunterschiede zwischen dem Feststoffbett und dem Schmelzewirbel im Extruder erfasst. Aus diesen Druckunterschieden kann dann auf die Breite des Feststoffbetts zurückgeschlossen und unter gewissen Gegebenheiten dann auf den Feststoffanteil geschlossen werden. Somit beruht die Messung des Aufschmelzzustandes wieder auf einer klassischen Druckmessung. Die beschriebene Verwendung von Drucksensoren zur Messung des Aufschmelzzustandes ist jedoch nur zielführend, wenn eine gewisse Anordnung zwischen Feststoff und Schmelze, nämlich eine Separation von Schmelze und Feststoff, stattfindet. Diese Separation tritt jedoch nicht bei allen Extrudern bzw. Spritzgießmaschinen auf. Daher ist die Anwendbarkeit dieses Verfahrens stark limitiert.

Bekannt sind ferner Messsysteme, bei denen Ultraschall zum Einsatz kommt. Mit Ultraschall werden elastische Wellen im Frequenzbereich von 16 kHz bis etwa 1 GHz bezeichnet. Sie breiten sich in Gasen und Flüssigkeiten als Longitudinalwelle und in Festkörpern als Longitudinal- und Transversalwelle aus. Ultraschall ist physikalisch gesehen eine Welle fortschreitender mechanischer Deformation in einem Medium. Da Ultraschall keine elektromagnetische Welle, sondern Druck- und Dichteschwankungen in einem Medium darstellt, hängt die Ausbreitung von Ultraschallwellen und deren Messung stark vom Zustand des beschallten Mediums, wie beispielsweise der Dichte und Temperatur des Mediums, ab. Ultraschall kann somit zur Bestimmung von Prozessparametern, wie beispielsweise von Temperatur oder Dichte bzw. Dichteunterschieden des im Extruder aufgenommenen Kunststoffmaterials verwendet werden. Mit der Vermessung von Dichteunterschieden kann ferner auch die Verweilzeit des zu extrudierenden Kunststoffmaterials ermittelt werden.

Die hier beschriebenen Messsysteme mittels Ultraschall messen die Beeinflussung einer elastischen Welle durch das durchschallte Medium. Das Messsignal ist dabei stark temperaturabhängig, da unter anderem die Ausbreitungsgeschwindigkeit der elastischen Wellen stark durch die Temperatur bestimmt wird. Im Extruder bzw. in der Spritzgießmaschine kann die Temperatur des durchschallten Kunststoffmaterials lokal stark variieren. Die Temperatur variiert dabei sowohl in radialer als auch in axialer Richtung. Somit kann eine Eigenschaft des Kunststoffs, wie beispielsweise seine Dichte oder sein Aufschmelzzustand, nicht entkoppelt von der Temperatur gemessen werden. Dies ist ein großer Nachteil, da insbesondere in Extrudern die Temperaturen lokal stark variieren können und somit nicht sicher festgestellt werden kann, ob eine Signaländerung aus einer Änderung der Messgröße (beispielsweise der Materialdichte) oder aus einer Änderung der Temperatur resultiert. Ferner kann häufig das tatsächliche Temperaturprofil an der jeweiligen Messposition nicht bestimmt werden. Es ist daher oft nicht möglich, den Temperatureinfluss auf die Messung zu eliminieren. Somit ist die Eignung von Ultraschall zur Detektion von Kunststoffeigenschaften (wie beispielsweise der Messung der Dichte) nur bedingt geeignet. Lediglich die Bestimmung der Temperatur unter der Annahme sonst gleicher Zustände des Kunststoffs hat sich etabliert.

Bekannt ist ferner, die Temperatur während der Extrusion außerhalb des Extruders zu messen. Bei derartigen Temperaturmessverfahren können herkömmliche Thermoelemente, Infrarotthermometer oder Ultraschall (vgl. DE 10 2009 004 946 A1) zum Einsatz kommen.

Weiterer technologischer Hintergrund ist in der US 2005/0214419 A1 und DE 10 2011 103 810 A1 sowie in C. Sklarczyk et al: "Radar sensor for monitoring the injection moulding processes", Proceedings of Spie, 9. Mai 2005, Bd. 5770, Seiten 24 bis 31 zu finden.

Aufgabe der vorliegenden Erfindung ist es, eine Technik zur Überwachung des Betriebszustandes eines Extruders oder einer Spritzgießmaschine bereitzustellen. Die Technik soll ferner für die Prozessüberwachung einsetzbar sein und die oben genannten Nachteile in Zusammenhang mit bekannten Systemen zur Prozessüberwachung überwinden.

Zur Lösung dieser Aufgabe sowie anderweitiger Aufgaben wird ein Verfahren zum Überwachen eines im Betrieb befindlichen Extruders oder einer im Betrieb befindlichen Spritzgießmaschine bereitgestellt, wobei das Verfahren folgende Schritte umfasst: Abstrahlen eines Radarwellensignals im Extruder bzw. in der Spritzgießmaschine; Detektieren eines dem abgestrahlten Radarwellensignal korrespondierenden Responsesignals; Ermitteln einer Laufzeit, Phasenverschiebung und/oder Intensitätsänderung des Radarwellensignals auf der Grundlage des detektierten Responsesignals; und Ermitteln wenigstens eines Betriebsparameters auf der Grundlage der ermittelten Laufzeit, Phasenverschiebung und/oder Intensitätsänderung des Radarwellensignals, wobei der Betriebsparameter auf einen Verschleißzustand des Extruders bzw. der Spritzgießmaschine, auf einen Phasenzustand und/oder auf eine stoffliche Zusammensetzung eines im Extruder bzw. in der Spritzgießmaschine aufgenommenen und zu verarbeitenden Materials hinweist.

Mit Phasenzustand ist der Aufschmelzzustand, also das Verhältnis von fester zu flüssiger Phase des Materials oder Materialmischung, gemeint.

Das im Extruder bzw. in der Spritzgießmaschine aufgenommene und zu verarbeitende Material kann als einkomponentiges oder mehrkomponentiges Material (also als Materialmischung aus mehreren Komponenten) vorliegen. Insbesondere kann das im Extruder bzw. in der Spritzgießmaschine aufgenommene und zu verarbeitende Material ein Kunststoffmaterial oder eine Kunststoffmaterialmischung aus wenigstens zwei Komponenten, wie beispielsweise eine Mischung aus mehreren Kunststoffen oder eine Mischung aus Kunststoff(en) und wenigstens einem Füllstoff oder aus Kunststoff(en) und Verstärkungsfasern, sein. Als Füllstoff kann beispielsweise Kreide zum Einsatz kommen. Als Verstärkungsfasern können Glasfasern, Kohlenstofffasern oder Naturfasern zum Einsatz kommen. Denkbar ist auch der Einsatz von recyclebarem Kunststoff, der im Extruder bzw. in der Spritzgießmaschine aufbereitet wird. Als Kunststoffmaterialien können insbesondere thermoplastische Kunststoffe zum Einsatz kommen.

Das abgestrahlte Radarwellenwellensignal ist im Gegensatz zu den eingangs erwähnten Ultraschallsignalen ein elektromagnetisches Signal. Es hat sich gezeigt, dass ein derartiges elektromagnetisches Signal bzw. sein Responsesignal im Vergleich zu Ultraschallsignalen deutlich geringer von Temperaturschwankungen im Inneren des Extruders, genauer gesagt von Temperaturschwankungen in dem im Extruder aufgenommenen Material, abhängt. Der geringe Einfluss von Temperaturschwankungen auf das Responsesignal kann beim erfindungsgemäßen Verfahren vernachlässigt werden.

Mit Responsesignal ist hierbei jenes elektromagnetische Signal (oder Signalanteil) gemeint, das (oder der) durch die Wechselwirkung des eingestrahlten Radarsignals mit dem im Extruder bzw. in der Spritzgießmaschine aufgenommenen Material und/oder mit Extruderkomponenten bzw. Spritzgießmaschinenkomponenten erzeugt wird. Je nach Implementierung des Verfahrens kann das Responsesignal den reflektierten Anteil des Radarwellensignals darstellen (z.B. ein Echosignal), der von dem zu extrudierenden Material oder von Oberflächen von Extruderkomponenten (wie beispielsweise von einer Extruderschnecke) oder Spritzgießmaschinenkomponenten (beispielsweise von einer Schnecke) reflektiert wird. Zusätzlich oder alternativ hierzu kann als Responsesignal auch der Transmissionsanteil des eingestrahlten Radarwellensignals ausgewertet werden, der durch das zu extrudierende Material hindurchgeht.

Um den Betriebszustand des Extruders bzw. der Spritzgießmaschine entlang seiner/ihrer Einzugszone, Kompressionszone bzw. Aufschmelzzone und/oder Ausstoßzone überwachen zu können, kann das Radarwellensignal an mehreren, in axialer Richtung und/oder radialer Richtung voneinander beabstandet angeordneten Positionen im Extruder bzw. in der Spritzgießmaschine abgestrahlt werden. Für jede Abstrahlungsposition kann das Responsesignal separat detektiert werden. Auf der Grundlage des an jeder Abstrahlungsposition detektierten Responsesignals kann dann wenigstens ein Betriebsparameter ermittelt werden.

Das an jeder Position im Extruder oder in der Spritzgießmaschine abgestrahlte Radarwellensignal kann in einem vorgegebenen Winkel zur axialen und/oder radialen Richtung des Extruders bzw. der Spritzgießmaschine abgestrahlt werden. Die axiale Richtung entspricht hierbei der Extrusionsrichtung des zu extrudierenden Materials. Mit radialer Richtung ist die Umfangsrichtung des Extruders bzw. der Spritzgießmaschine gemeint. Gemäß einer Variante kann die Abstrahlung im Wesentlichen senkrecht zur Extrusionsrichtung erfolgen. Alternativ kann die Abstrahlung auch geneigt zur Extrusionsrichtung erfolgen.

Das an jeder Position des Extruders abgestrahlte Radarwellensignal kann ein gepulstes Radarwellensignal oder ein kontinuierliches Radarwellensignal sein. Gemäß einer Implementierung kann ein frequenzmoduliertes kontinuierliches (FMCW) Radarwellensignal abgestrahlt werden.

Das abgestrahlte Radarwellensignal kann wenigstens eine Frequenz im Bereich zwischen 30 GHZ und 300 GHZ aufweist. Bei Verwendung eines FMCW Radarwellensignals kann sich die Frequenz des abgestrahlten Signals periodisch ändern, wobei die abgestrahlten Frequenzen im Frequenzbereich zwischen 30 GHz und 300 GHz liegen können.

Aus dem abgestrahlten Radarwellensignal sowie aus dem detektierten Responsesignal (Radarwellenechosignal oder Transmissionssignal) wird als Messparameter die Laufzeit, Phasenverschiebung und/oder die Intensitätsänderung des abgestrahlten Radarwellensignals ermittelt. Diese Messparameter können durch Vergleich des abgestrahlten Radarwellensignal (Primärsignal) und des detektierten Responsesignals ermittelt werden. Beispielsweise kann die Laufzeit durch Messung der verstrichenen Zeit zwischen Abstrahlung des Radarwellensignals und Detektion des korrespondierenden Responsesignals ermittelt werden. Die Intensitätsänderung kann durch Differenzbildung der Intensitäten des abgestrahlten Radarwellensignals und des detektierten Responsesignal ermittelt werden. Genauso kann die Phasenverschiebung durch Differenzbildung der Phasen des abgestrahlten Radarwellensignals und des detektierten Responsesignals ermittelt werden.

Es wurde gefunden, dass die oben genannten Messparameter von der stofflichen Zusammensetzung des im Extruder bzw. Spritzgießmaschine aufgenommen Materials abhängen. Die oben genannten Parameter können ferner auch von der Beschaffenheit des Extruders bzw. der Spritzgießmaschine abhängen. Beispielsweise kann die Laufzeit des elektromagnetischen Radarwellensignals von der stofflichen Zusammensetzung sowie vom Phasenzustand (Aufschmelzzustand) des zu extrudierenden Materials abhängen. Ebenso kann die ermittelte Intensitätsänderung im Radarwellensignal Auskunft über die stoffliche Zusammensetzung und den Phasenzustand des zu extrudierenden Materials liefern, da das Absorptionsvermögen des zu extrudierenden Materials in der Regel von der stofflichen Zusammensetzung und/oder vom Phasenzustand des zu extrudierenden Materials abhängt. Ferner kann die Phasenänderung Auskunft über die Beschaffenheit von das Radarwellensignal reflektierenden Grenzflächen geben (wie beispielsweise von der Oberfläche einer Extruderschnecke), da sich je nach Beschaffenheit der Grenzfläche die Phase des reflektierten Signalanteils ändern kann.

Gemäß einer Implementierung kann als Betriebsparameter der Brechungsindex des zu extrudierenden und im Extruder bzw. Spritzgießmaschine aufgenommenen Materials auf der Grundlage der detektierten Laufzeit, Phasenverschiebung und/oder Intensitätsänderung des Radarwellensignals ermittelt werden. Es wurde gefunden, dass sich der Brechungsindex einer Vielzahl von Kunststoffmaterialen, die in Extrusion und Spritzgussverfahren zum Einsatz kommen, beim Aufschmelzen des Kunststoffmaterials ändert. Ist die Zusammensetzung des Kunststoffmaterials (näherungsweise) bekannt, so kann durch Ermittlung des Brechungsindex und unter Zuhilfenahme eines Brechungsindexmodells der Phasenzustand des Kunststoffmaterials im Extruder bzw. Spritzgießmaschine ermittelt werden. Das Brechungsindexmodell kann hierbei den Verlauf des Brechungsindex des Kunststoffmaterials am Übergang von der festen zur flüssigen Phase des Kunststoffmaterials beschreiben. Dieser Verlauf kann in Vorversuchen oder in Echtzeit (also während eines Extrusionsprozesses) experimentell ermittelt werden. Das Modell kann den Brechungsindexverlauf am Phasenübergang in Form einer analytischen Funktion oder in Form numerischer Daten (beispielsweise in Form einer Look-up Tabelle, welche ermittelte Brechungsindexwerte korrespondierenden Schmelzzustandswerten zuordnet) beschreiben.

Genauso kann der Brechungsindex von der stofflichen Zusammensetzung eines zu extrudierenden Materialgemisches abhängen. Es wurde gefunden, dass der Brechungsindex eine Variation in Abhängigkeit der Stoffkonzentration des Materialgemisches aufweist, wenn die Ausgangsstoffe des Materialgemisches einen voneinander verschiedenen Brechungsindex aufweisen. Dies ist für eine Vielzahl von Kunststoffmischungen der Fall. Insbesondere gilt dies auch für eine Vielzahl von geschäumten oder entgasten Kunststoffen, wobei der Brechungsindex von der Konzentration des beigesetzten Treibmittels bzw. vom Entgasungszustand des zu extrudierenden Kunststoffs abhängt. Sind der Aufschmelzzustand des Materialgemisches sowie die Ausgangsstoffe des Materialgemisches (annähernd) bekannt, so kann aus dem ermittelten Brechungsindex und mit Hilfe eines Brechungsindexmodells auch die stoffliche Zusammensetzung ermittelt werden. Das Brechungsindexmodell kann hierbei die Brechungsindexänderung in Abhängigkeit der Konzentration der Ausgangsstoffe beschreiben. Mit Hilfe des gemessenen Brechungsindex kann somit unter Kenntnis der Art der Ausgangsstoffe die stoffliche Zusammensetzung und/oder der Aufschmelzzustand eines zu extrudierenden Kunststoffmaterials an oder in der Nähe einer jeden Messposition zuverlässig ermittelt werden.

Der Brechungsindex kann direkt aus der detektierten Laufzeit des Radarwellensignals ermittelt werden, da die Laufzeit von der Ausbreitungsgeschwindigkeit Cm des Radarwellensignals im durchstrahlten Material abhängt, und die Ausbreitungsgeschwindigkeit Cm direkt proportional zum Brechungsindex n gemäß der Beziehung n = *Cv*/*Cm* ist, wobei *Cv* die Ausbreitungsgeschwindigkeit im Vakuum darstellt. Gemäß einer Weiterführung können neben der Laufzeit auch noch Intensitätsänderungen (bedingt durch Absorption im durchstrahlten Medium) und Phasenverschiebungen zwischen eingestrahltem Radarwellensignal und Responsesignal ausgewertet werden, um Rückschlüsse auf den Brechungsindex zu erhalten.

Gemäß einer weiteren Implementierung kann als Betriebsparameter eine Abstandsinformation aus der ermittelten Laufzeit, Phasenverschiebung und/oder Intensitätsänderung ermittelt werden. Beispielsweise können bei annähernd bekanntem Brechungsindex des zu extrudierenden Materials Abstände zwischen Extruderkomponenten ermittelt werden. Beispielsweise kann der radiale Abstand einer Extruderschnecke zur Innenwand des die Extruderschnecke aufnehmenden Extrudergehäuses ermittelt werden. Aus den ermittelten Abstandswerten und deren Änderungen kann der Verschleißzustand der Extruderschnecke ermittelt werden.

Das hier beschriebene Verfahren sowie die mit dem Verfahren zusammenhängenden Implementierungen können in Echtzeit durchgeführt werden. Der Verschleiß des Extruders bzw. Spritzgießmaschine, die stoffliche Zusammensetzung und der Aufschmelzzustand des im Extruder bzw. in der Spritzgießmaschine aufgenommen Materials können während des Extrusionsprozesses in Echtzeit überwacht werden. Die Echtzeitüberwachung ermöglicht somit eine bessere Prozessführung, da Abweichungen von gewünschten Stoffzusammensetzungen oder Aufschmelzzuständen sofort erkannt werden und durch entsprechende Einstellung oder Nachjustierung der Prozessparameter korrigiert werden können.

Zur Lösung der oben genannten Aufgabe wird ferner ein Messsystem bereitgestellt. Das Messsystem umfasst eine Messeinrichtung, die dazu ausgebildet ist, ein Radarwellensignal zu erzeugen und im Extruder oder in der Spritzgießmaschine abzustrahlen, sowie ein dem abgestrahlten Radarwellensignal korrespondierendes Responsesignal zu detektieren; und eine Auswerteeinrichtung, die dazu ausgebildet ist, eine Laufzeit, Phasenverschiebung und/oder Intensitätsänderung des Radarwellensignals auf der Grundlage des detektierten Responsesignals zu ermitteln, und wenigstens einen Betriebsparameter des Extruders oder der Spritzgießmaschine auf der Grundlage der ermittelten Laufzeit, Phasenverschiebung und/oder Intensitätsänderung des Radarwellensignals, zu ermitteln. Der ermittelte Betriebsparameter weist auf einen Verschleißzustand des Extruders oder Spritzgießmaschine, auf einen Phasenzustand und/oder auf eine stoffliche Zusammensetzung eines im Extruder oder in der Spritzgießmaschine aufgenommenen und zu verarbeitenden Materials hin.

Die Messeinrichtung kann wenigstens einen Radarwellensender umfassen, der zur Erzeugung eines Radarwellensignals ausgebildet ist. Gemäß einer Variante kann die Messeinrichtung eine Vielzahl von räumlich voneinander beabstandet angeordneten Radarwellensendern umfassen, die jeweils zur Erzeugung eines Radarwellensignals ausgebildet sind. Jeder Radarwellensender der Messeinrichtung kann im Extruder (Spritzgießmaschine) derart angeordnet sein, dass er mit einem Materialaufnahmekanal des Extruders bzw. der Spritzgießmaschine elektromagnetisch gekoppelt ist. Elektromagnetische Kopplung bedeutet, dass die von jedem Radarwellensender erzeugten Radarwellensignale direkt (also ohne nennenswerte Abschirmungsverluste durch ein Extrudergehäuse) auf das im Extruderkanal aufgenommene und zu verarbeitende Material abgestrahlt werden.

Jeder Radarwellensender kann dazu ausgebildet sein, gepulste oder kontinuierliche Radarwellensignale im Bereich zwischen 30 GHz bis 300 GHz abzustrahlen. Gemäß einer Variante kann jeder Radarwellensender ein FMCW Signal abstrahlen.

Ferner kann die Messeinrichtung wenigstens einen Radarwellenempfänger umfassen, der zur Detektion eines mit dem abgestrahlten Radarwellensignal korrespondierenden Responsesignals ausgebildet ist. Umfasst die Messeinrichtung eine Vielzahl von voneinander beabstandet angeordneten Sendern, so kann für jeden Sender ein korrespondierender Empfänger vorgesehen sein. Radarwellensender und Radarwellenempfänger können bei einer Radarwellenechomessung in Form eines Radarwellentransceivers an derselben Position im Extruder angeordnet sein. Bei Transmissionsmessung können Sender und Empfänger im Extruder gegenüberliegend angeordnet sein.

Die Auswerteeinrichtung des Messsystems kann dazu ausgebildet sein, auf der Grundlage des detektierten Responsesignals die Laufzeit, Phasenverschiebung und/oder Intensitätsänderung des durch das Material und/oder die Extruderkomponenten oder die Spritzgießmaschinenkomponenten sich ausbreitenden Radarwellensignals zu ermitteln. Die Auswerteeinrichtung kann ferner dazu ausgebildet sein, auf der Grundlage der erfassten Laufzeit, Phasenverschiebung und/oder Intensitätsänderung einen Brechungsindex des im Extruder oder in der Spritzgießmaschine aufgenommenen und zu verarbeitenden Materials zu ermitteln, und mit Hilfe eines vorgegebenen Brechungsindexmodells den Phasenzustand und/oder die stoffliche Zusammensetzung des Materials zu ermitteln.

Die Auswerteeinrichtung kann ferner dazu ausgebildet sein, auf der Grundlage der erfassten Laufzeit, Phasenverschiebung und/oder Intensitätsänderung Abstände zwischen Komponenten des Extruders oder der Spritzgießmaschine zu ermitteln, und mit Hilfe eines vorgegebenen Modells den Verschleißzustand des Extruders oder der Spritzgießmaschine zu ermitteln.

Ferner werden ein Extruder und eine Spritzgießmaschine bereitgestellt, die jeweils das oben beschriebene Messsystem implementieren. Der Extruder kann hierbei in der Form eines Einschneckenextruders, Doppelschneckenextruders oder Mehrschneckenextruders implementiert sein. Das Messsystem kann am oder im Extruder bzw. an oder in der Spritzgießmaschine angeordnet sein. Insbesondere können Sender und Empfänger der Messeinrichtung am oder im Extruder bzw. Spritzgießmaschine derart angeordnet sein, dass sie jeweils mit dem Materialaufnahmekanal des Extruders bzw. der Spritzgießmaschine elektromagnetisch gekoppelt sind.

Weitere Einzelheiten und Vorteile der Erfindung ergeben sich anhand der nachfolgenden Zeichnungen, die Implementierungen der vorliegenden Erfindung darstellen. Es zeigen:
- Fig. 1: ein Blockdiagramm, das schematisch ein Messsystem zur Überwachung des Betriebszustands eines Extruders oder einer Spritzgießmaschine gemäß der vorliegenden Erfindung darstellt;
- Fig. 2: einen Schneckenextruder, an dem das in Fig. 1 gezeigte Messsystem exemplarisch implementiert ist;
- Fig. 3: ein Flussdiagramm, das ein Verfahren zum Überwachen des Betriebszustands eines Extruders oder einer Spritzgießmaschine darstellt;
- Fign. 4a-4c: eine Implementierung des Verfahrens gemäß Fig. 3; und
- Fig. 5: eine weitere Implementierung des Verfahrens gemäß Fig. 3.

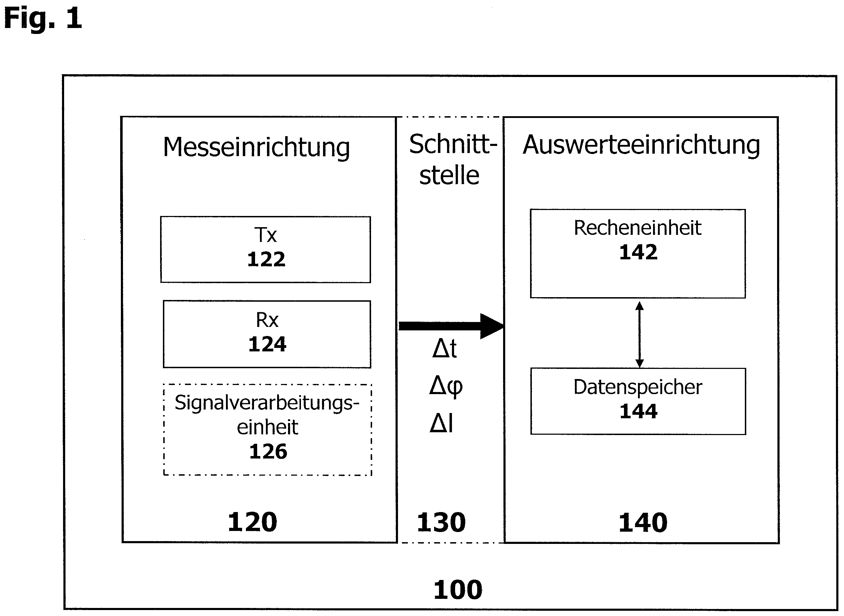

Im Zusammenhang mit Fig. 1 wird ein Messsystem 100 zur Überwachung des Betriebs eines Extruders oder einer Spritzgießmaschine gemäß der vorliegenden Erfindung weiter beschrieben.

Das Messsystem 100 umfasst eine Messeinrichtung 120 und eine Auswerteeinrichtung 140. Sind Messeinrichtung 120 und Auswerteeinrichtung 140 als separate Einheiten ausgebildet, so kann das Messsystem 100 ferner eine (drahtgebundene oder drahtlose) Schnittstelle 130 aufweisen, über die die Einrichtungen 120, 140 miteinander kommunizieren. Beispielsweise kann die Messeinrichtung 120 direkt in einem Extruder oder einer Spritzgussmaschine angeordnet sein, während die Auswerteeinrichtung in einem zum Extruder oder zur Spritzgussmaschine extern angeordneten Computer implementiert ist. In Fig. 1 ist die Kommunikationsschnittstelle durch Strichlinie angedeutet. Der Transfer von Messdaten von der Messeinrichtung 120 zur Auswerteeinrichtung 140 ist durch einen Pfeil angedeutet.

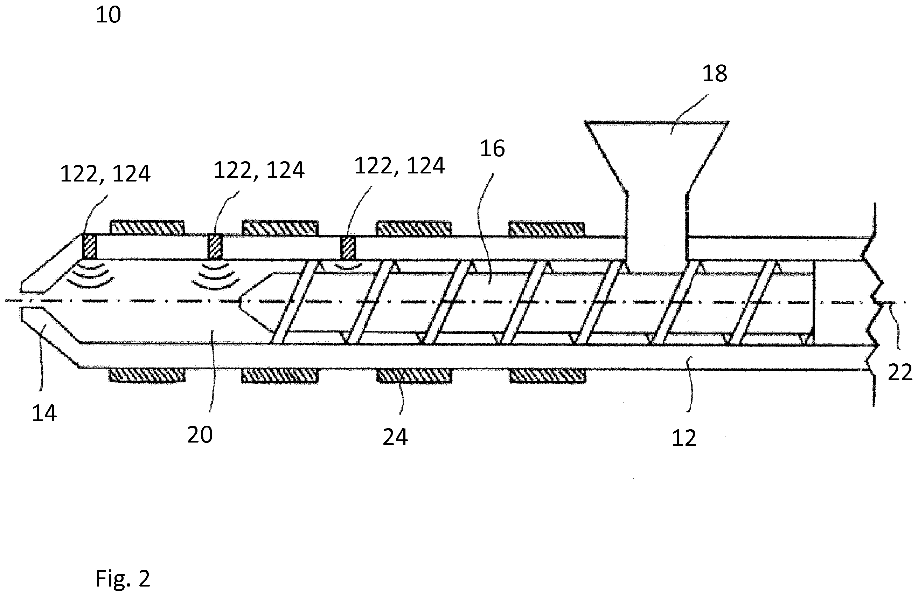

Die in Fig. 1 gezeigte Messeinrichtung 120 umfasst wenigstens einen Sender Tx 122 sowie wenigstens einen dazugehörigen Empfänger Rx 124. In Fig. 1 ist exemplarisch jeweils ein Sender 122 und Empfänger 124 dargestellt. Es versteht sich, dass die Messeinrichtung 120 auch zwei oder mehr Sender 122 und dazugehörige Empfänger 124 aufweisen kann. Ferner können die in Fig. 1 separat ausgebildeten Sender 122 und Empfänger 124 auch in Form von Transceivern ausgebildet sein. Der wenigstens eine Sender und Empfänger 122, 124 kann an oder in einem zu überwachenden Extruder oder Spritzgießmaschine angeordnet sein, wie in Zusammenhang mit Fig. 2 weiter unten noch näher erläutert wird. Ferner umfasst die Messeinrichtung 120 eine Signalverarbeitung 126.

Der wenigstens eine Sender 122 der Messeinrichtung 120 ist dazu ausgebildet, gepulste oder kontinuierliche Radarwellensignale zu erzeugen und an das zu extrudierende Material abzustrahlen (siehe auch Fig. 2). Die erzeugten Radarwellensignale eines jeden Senders 122 können wenigstens eine Frequenz im Bereich zwischen 30 GHz bis 300 GHz aufweisen. Der wenigstens eine Empfänger 124 ist zur Detektion des durch das zu extrudierende Material und/oder Extruderkomponenten oder Spritzgusskomponenten erzeugten Responsesignals ausgebildet. Das Responsesignal kann der transmittierte Radarwellensignalanteil (bei Transmissionsmessung) oder der reflektierte Radarwellensignalanteil (bei Reflexionsmessung) sein.

Die Signalverarbeitungseinheit 126 kann dazu ausgebildet sein, aus den erfassten Responsesignalen Signalparameter, wie Laufzeit Δt, Intensitätsänderung ΔI und/oder Phasenverschiebung Δφ des Radarwellensignals zu ermitteln. Dies geschieht durch Vergleich des Responsesignals mit dem abgestrahlten Radarwellensignal. Die von der Signalverarbeitungseinheit ermittelten Signalparameter können dann (in Form von digitalen Daten) an die Auswerteeinrichtung 140 übergeben werden. Alternativ hierzu, können die Funktionalitäten der Signalverarbeitungseinheit in der Recheneinheit 142 der Auswerteeinrichtung 140 implementiert sein. Mit anderen Worten kann gemäß einer von Fig. 1 abweichenden Implementierung die Signalverarbeitungseinheit 126 auch Teil der Recheneinheit 142 der Auswerteeinrichtung 140 sein.

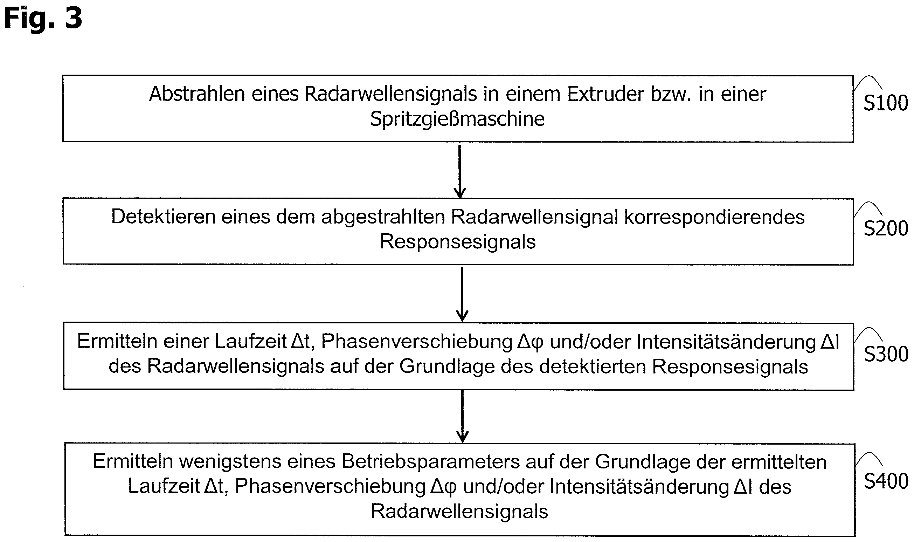

Die Recheneinheit 142 umfasst wenigstens einen Prozessor oder integrierten Schaltkreis. Die Recheneinheit 142 ist dazu ausgebildet, auf der Grundlage der ermittelten Signallaufzeit Δt, Intensitätsänderung ΔI und/oder Phasenverschiebung Δφ wenigstens einen Betriebsparameter zu ermitteln. Wie in Zusammenhang mit den Fign. 3 bis 5 noch näher beschrieben wird, kann aus diesen Betriebsparametern auf die Stoffzusammensetzung und/oder Phasenzustand (Aufschmelzzustand) des im Extruder aufgenommenen Materials (Kunststoffmaterials) geschlossen werden.

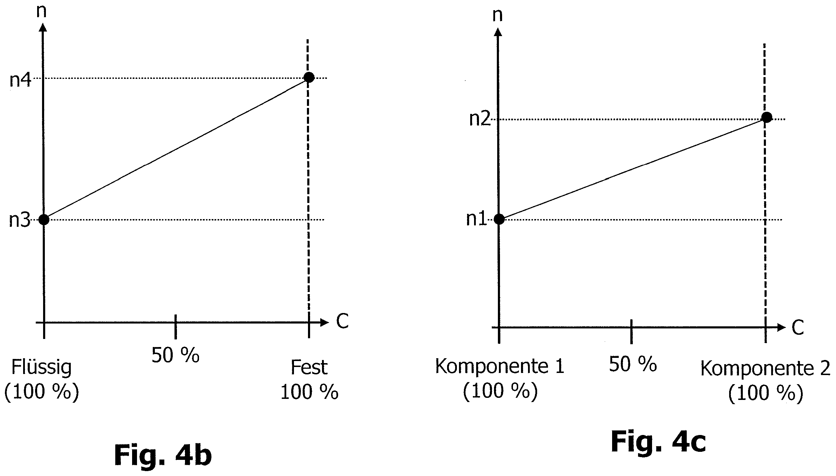

Der Datenspeicher 144 kann dazu ausgebildet sein, die in Echtzeit ermittelten Signalparameter und daraus ermittelten Betriebsparameter kurz und/oder langfristig zu speichern. Im Datenspeicher 144 können ferner Modelle über den Extruder oder die Spritzgießmaschine und/oder Brechungsindexmodelle für die zu extrudierenden Materialien bzw. Materialmischungen hinterlegt sein. Derartige Brechungsindexmodelle werden in Zusammenhang mit den Fign. 4b und 4c weiter unten noch näher beschrieben.

Optional kann das Messsystem 100 ferner eine Ausgabeeinrichtung umfassen, die dazu ausgebildet ist, die Ergebnisse der Recheneinheit 142 optisch und/oder akustisch auszugeben. Die Ausgabeeinrichtung ist in Fig. 1 nicht dargestellt. Gemäß einer Variante können die Ergebnisse der Recheneinheit 142 auf einem Bildschirm eines Computers, Smartphone oder anderweitigen elektronischen Geräts dargestellt werden.

In Zusammenhang mit Fig. 2 wird eine Implementierung des oben beschriebenen Messsystems 100 in einem Extruder 10 exemplarisch beschrieben. Der Extruder 10 ist als Einschneckenextruder konzipiert. Es versteht sich, dass das hier beschriebene Messsystem nicht von der konkreten Ausgestaltung des Extruders 10 oder einer Spritzgießmaschine abhängt, sondern in jeglichen Typ von Extruder (Einschneckenextruder, Doppelschneckenextruder oder Mehrschneckenextruder) oder Spritzgießmaschine implementierbar ist.

Der Extruder 10 umfasst ein Extrudergehäuse 12, eine am vorderen axialen Ende des Gehäuses 12 angeordnete Düse 14 (Matrize) oder Werkzeug, wenigstens eine Extruderschnecke 16, sowie eine Befülleinrichtung 18. Das Gehäuse 12 definiert einen rotationssymmetrischen Extruderkanal 20 mit Rotationsachse 22. Im Extruderkanal 20 ist die Extruderschnecke 16 angeordnet, die um die Rotationsachse 22 drehbar ist. Die Extruderschnecke 16 kann beispielsweise bezüglich der stirnseitigen Düse 14 axial vor und zurück verschiebbar sein. Die Rotationsbewegung und Translationsbewegung der Schnecke 16 erfolgt durch eine Antriebseinrichtung, die an der der Düse 14 gegenüberliegenden Rückseite des Extruders angeordnet ist und mit der Schnecke 16 gekoppelt ist (in Fig. 2 nicht dargestellt),

Die Befülleinrichtung 18 ist mit dem Extruderkanal 20 gekoppelt. Sie dient dazu, das zu extrudierende Material oder Materialgemisch (in der Regel Kunststoffmaterial) in Form von Pellets oder Granulat dem Extruderkanal 20 zuzuführen. Wie in Fig. 2 klar zu erkennen ist, wird das zu extrudierende Kunststoffmaterial dem Extruderkanal 20 an seinem der Düse abgewandten Ende zugeführt. Dieser Extruderbereich wird auch Einzugszone genannt. Durch die Rotation der Schnecke 16 um die Rotationsachse 22 wird das in der Einzugszone zunächst noch im festen Zustand vorliegende Kunststoffmaterial in Richtung der Düse bewegt. Durch Erhitzen des Kunststoffmaterials mittels am Extruder 10 angebrachter Heizelemente 24 sowie durch Reibung des bewegten Kunststoffmaterials an der Schnecke bzw. an der Extruderinnenwand wird das in Richtung der Düse 14 bewegte Kunststoffmaterial sukzessive aufgeschmolzen und verdichtet (Kompressionszone bzw. Aufschmelzzone des Extruders 10), bis das Kunststoffmaterial im Bereich der Düse 14 (Ausstoßzone des Extruders 14) im gewünschten plastifizierten Zustand vorliegt.

Das im Extruder 10 implementierte Messsystem 100 umfasst eine Messeinrichtung 120 mit mehreren Transceivern (Sender und Empfänger 122, 124), die in axialer Richtung des Extruders 10 voneinander beabstandet angeordnet sind. Durch die Verwendung von mehreren Transceivern an unterschiedlichen axialen Positionen, kann der Betriebszustand in jeder Betriebszone des Extruders überwacht werden. Die Auswerteeinrichtung 140 des Messsystems 100 ist von der Messeinrichtung 120 separat ausgebildet und in Fig. 2 nicht weiter dargestellt.

Jeder entlang der axialen Richtung angeordnete Transceiver 122, 124 ist in direkter elektromagnetischer Kopplung mit dem Extruderkanal 20 des Extruders 10. Eine direkte elektromagnetische Kopplung wird beispielsweise erreicht, indem jeder Transceiver 122, 124 im Extruderkanal 20 oder im Extrudergehäuse 12 (z.B. in eigens dafür vorgesehene Ausnehmungen an der Innenwand des Extrudergehäuses 12) untergebracht wird. Durch die beschriebene Kopplung zwischen Transceiver 122, 124 und Extruderkanal 20 wird erreicht, das das vom Transceiver 122, 124 erzeugte Radarwellensignal verlustfrei (also ohne Abschirmung) in den Extruderkanal 20 abgestrahlt wird. In Fig. 2 wird die Abstrahlung des Radarwellensignals in den Extruderkanal 20 schematisch angedeutet. Genauso kann das durch das durchstrahlte Kunststoffmaterial und/oder durch Reflexion an Extruderkomponenten (z.B. an der Extruderschnecke oder an der Innenwand des Gehäuses) erzeugte Responsesignal ohne nennenswerte Abschirmung oder Beeinflussung durch das Extrudergehäuse 12 von den Transceivern 122, 124 detektiert werden. Die in Fig. 2 gezeigte Implementierung der Messanordnung 100 misst als Responsesignal das an jedem Transceiver 122, 124 ankommende reflektierte Radarwellensignal (Echosignal). Da in der in Fig. 2 gezeigten Implementierung Transceiver in der Ausstoßzone, Kompressionszone bzw. Aufschmelzzone und Einzugszone angeordnet sind, kann mit dem beschriebenen Messsystem 100 jede Extruderzone separat überwacht werden.

Alternativ zu der in Fig. 2 gezeigten Implementierung kann die Messeinrichtung 120 auch räumlich getrennte, sich gegenüberliegend angeordnete Sender 122 und Empfänger 124 aufweisen, um das transmittierte Radarwellensignal als Responsesignal zu detektieren.

Anhand von Fig. 3 wird das Messverfahren zur Überwachung des Betriebszustands eines Extruders oder Spritzgießmaschine weiter beschrieben. Das Verfahren wird durch das in den Fign. 1 und 2 beschriebene Messsystem 100 implementiert.

In einem ersten Schritt S100 wird mittels wenigstens eines Senders 122 ein Radarwellensignal erzeugt und in einem Extruder (beispielsweise Extruder 10) bzw. in einer Spritzgießmaschine abgestrahlt. Das Radarwellensignal weist eine vorgegebene Frequenz oder Frequenzen auf. Sind mehrere Sender 122 im Extruder 10 angeordnet (vgl. Fig. 2), so strahlt jeder Sender 122 ein entsprechendes Radarwellensignal in den Extruderkanal 20 ab.

Die von jedem Sender 122 abgestrahlte Radarwelle breitet sich durch das im Extruderkanal 20 aufgenommene und zu verarbeitende Kunststoffmaterial aus und wechselwirkt mit dem durchstrahlten Kunststoffmaterial und den sich in Ausbreitungsrichtung befindlichen Extruderkomponenten. Beispielsweise wird jedes im Extruderkanal 20 sich ausbreitende Radarwellensignal an den Innenwänden des Extrudergehäuses 12 oder an der Schneckenoberfläche reflektiert. In einem zweiten Schritt S200 wird das reflektierte Radarwellensignal als Responsesignal durch entsprechende Empfänger 124 detektiert.

In einem darauffolgenden dritten Schritt S300 wird mittels der Signalverarbeitungseinheit 126 oder Recheneinheit 142 auf der Grundlage eines jeden detektierten Responsesignals eine Signallaufzeit Δt, Intensitätsänderung ΔI und/oder Phasenverschiebung Δφ des Radarwellensignals ermittelt. Dies geschieht durch Vergleich eines jeden abgestrahlten Radarwellensignals (Primärsignal) mit dem dazu korrespondierenden Responsesignal, wie weiter oben beschrieben.

In einem weiteren Schritt S400 wird mittels der Recheneinheit 142 auf der Grundlage der ermittelten Laufzeit Δt, Phasenverschiebung Δφ und/oder Intensitätsänderung ΔI eines jeden abgestrahlten Radarwellensignals wenigstens ein Betriebsparameter für den Extruder oder Spritzgießmaschine ermittelt.

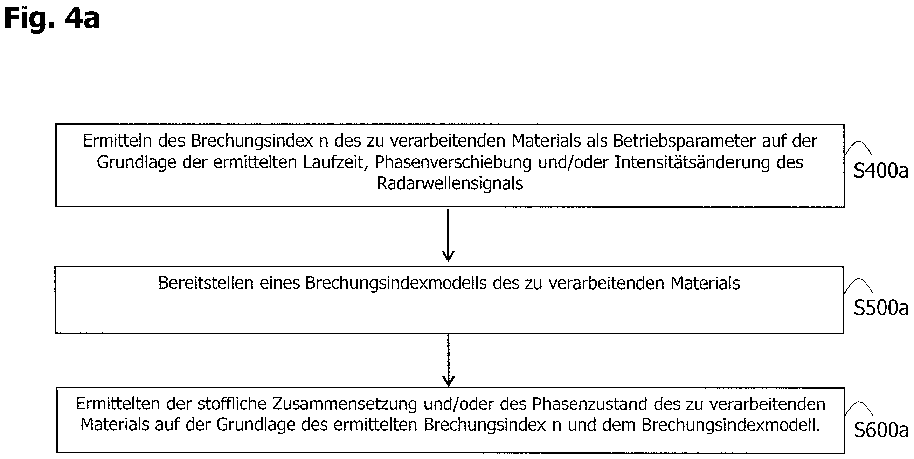

In Zusammenhang mit den Fign. 4a-4c wird eine Implementierung des Schritts S400 weiter beschrieben. Fig. 4a zeigt hierbei ein Flussdiagramm, das die Ermittlung des Brechungsindex n eines im Extruder oder Spritzgießmaschine aufgenommenen und mit Radiowellen durchstrahlten Kunststoffmaterials als Betriebsparameter zeigt. Es wurde nämlich gefunden, dass sich der Brechungsindex n einer Vielzahl von Kunststoffmaterialen, die in Extrusion und Spritzgussverfahren zum Einsatz kommen können, beim Aufschmelzen genügend deutlich ändert, so dass diese Änderung mit Radarwellen messbar wird. Es hat sich ferner gezeigt, dass die Änderung des Brechungsindex n von Kunststoffmaterialien bedingt durch einen Phasenwechsel (z.B. beim Übergang vom festen in den flüssigen Zustand) um wenigstens eine Größenordnung höher ist, als eine Änderung des Brechungsindex n bedingt durch Temperaturschwankungen oder Temperaturänderungen im Material. Somit können Temperatureinflüsse auf den Brechungsindex vernachlässigt werden. Ein typischer Brechungsindexverlauf beim Aufschmelzen von Kunststoff ist in Fig. 4b zu sehen. Der Brechungsindex ändert sich von einem Brechungsindexwert *n3* im flüssigen (geschmolzenen) Zustand zu einem höheren Brechungsindexwert n4 im festen (erstarrten) Zustand. Im Aufschmelzvorgang liegt der Brechungsindex zwischen den beiden Extremalwerten *n3* und *n4* und hängt vom jeweiligen Mischungsverhältnis von fester und flüssiger Phase ab. Ist der Verlauf des Brechungsindex n am Phasenübergang fest-flüssig bekannt, so kann durch Messung des Brechungsindex n leicht auf das Mischverhältnis von Schmelze zu Feststoff geschlossen werden.

Es hat sich ferner gezeigt, dass der Brechungsindex n einer Kunststoffmischung aus mehreren Komponenten von der Konzentration der jeweiligen Komponenten abhängt. Fig. 4c zeigt schematisch den Verlauf des Brechungsindex n einer geschmolzenen Kunststoffmischung aus einer Komponente 1 und Komponente 2. Besteht die Schmelze aus zwei Komponenten, die sich in ihrem Brechungsindex *n1* und n2 voneinander messbar unterscheiden, so kann aus dem Verlauf des Brechungsindex n auch auf das Mischverhältnis der beiden Komponenten 1 und 2 geschlossen werden. Dies gilt für eine Vielzahl von gängigen Kunststoffmischungen. Dies gilt insbesondere für eine Vielzahl von geschäumten oder entgasten Kunststoffen, wobei der Brechungsindex von der Konzentration des beigesetzten Treibmittels bzw. vom Entgasungszustand des zu extrudierenden Kunststoffs abhängt. Somit kann beispielsweise in der Ausstoßzone des Extruders die stoffliche Zusammensetzung der Schmelze, wie beispielsweise der Entgasungszustand der Schmelze, die Konzentration von Treibmitteln in der Schmelze oder die Konzentration von anderweitigen, der Schmelze zugegebenen Additiven, Füllstoffen und/oder Verstärkungsstoffen, ermittelt werden. Als Füllstoffe können beispielsweise mineralische Füllstoffe, wie beispielsweise Kreide, oder funktionelle Füllstoffe, wie beispielsweise Metallpartikel, zur Änderung der elektrischen und/oder magnetischen Eigenschaften des Materials zum Einsatz kommen. Als Verstärkungsstoffe können Glasfasern, Kohlefasern, Naturfasern oder anderweitige Fasern zur Verstärkung der mechanischen Eigenschaften des Materials zum Einsatz kommen. Als Additive können beispielsweise Antioxidantien, Nukleierungsmittel, Farbstoffe oder anderweitige Stoffe zum Einsatz kommen.

Zurück zu Fig. 4a. Die Ermittlung des Brechungsindex n als Betriebsparameter erfolgt auf der Grundlage der ermittelten Laufzeit Δt, Phasenverschiebung Δφ und/oder Intensitätsänderung ΔI des Radarwellensignals. Beispielsweise kann der Brechungsindex n leicht aus der ermittelten Signallaufzeit Δt extrahiert werden, da die Signallaufzeit Δt indirekt proportional zur Signalausbreitungsgeschwindigkeit Cm und dem zurückgelegten Weg Δs im Extruderkanal 20 gemäß der Gleichung Δt = Δs/*Cm* ist. Da die Signalausbreitungsgeschwindigkeit Cm ferner vom Brechungsindex n des durchstrahlten Kunststoffmaterials gemäß der Gleichung *Cm = Cv*/*n* abhängt, wobei *Cv* der Brechungsindex von Vakuum ist, folgt unmittelbar die Beziehung Δt = n^{∗}Δs/*Cv*. Da der Brechungsindex *Cv* bekannt ist, kann bei bekanntem Δs der Brechungsindex n leicht ermittelt werden.

Um aus dem ermittelten Brechungsindex n die stoffliche Zusammensetzung oder den Aufschmelzzustand eines zu verarbeitenden Kunststoffmaterials zu ermitteln, wird ein entsprechendes Brechungsindexmodell bereitgestellt (Schritt 500a). Ein Brechungsindexmodell beschreibt den Verlauf des Brechungsindex n einer Kunststoffmaterialmischung in Abhängigkeit seines Mischverhältnisses von Schmelze zu Feststoff (vgl. Fig. 4b) und/oder in Abhängigkeit seiner stofflichen Zusammensetzung (vgl. Fig. 4c). Derartige Brechungsindexmodelle können für die jeweiligen Kunststoffmaterialmischungen durch Vorversuche bestimmt werden und in dem Datenspeicher 144 hinterlegt werden. Sie brauchen dann bei der Ausführung des erfindungsgemäßen Verfahrens lediglich von der Recheneinheit 142 aufgerufen zu werden, wodurch die Echtzeitüberwachung erst möglich wird. Zusätzlich oder alternativ hierzu ist auch eine Echtzeitbestimmung von Brechungsindexmodellen denkbar. Mit Echtzeitbestimmung ist die Bestimmung eines Brechungsindexmodells während eines Extrusionsprozesses gemeint. Beispielsweise kann mit Hilfe der hier beschriebenen Radarwellenmesstechnik der Brechungsindex n4 des im Einzugsbereich des Extruders vorliegenden festen Materials und der Brechungsindex *n3* des im Ausstoßbereich des Extruders vorliegenden vollständig aufgeschmolzenen Materials bestimmt werden. Aus den beiden gemessenen Grenzwerten n3 und n4 für den flüssigen und festen Zustand des zu extrudierenden Materials kann dann auf jede beliebige Mischung von fester und flüssiger Phase im Extruder geschlossen werden.

Im darauffolgenden Schritt S600a wird auf der Grundlage des ermittelten Brechungsindex n und dem Brechungsindexmodell die stoffliche Zusammensetzung und/oder der Aufschmelzzustand des zu extrudierenden Materials ermittelt. Ist beispielsweise die Zusammensetzung des Kunststoffmaterials (näherungsweise) bekannt, so hängt der Brechungsindex n lediglich vom Verhältnis Schmelze zu Feststoff des zu extrudierenden Kunststoffmaterials ab. Mit Hilfe eines Brechungsindexmodells wie in Fig. 4c dargestellt, kann dann bei ermitteltem Brechungsindex n der Aufschmelzzustand des zu extrudierenden Kunststoffmaterials ermittelt werden. Ist hingegen der Aufschmelzzustand bekannt, z.B. durch Auswertung von Temperaturdaten, die von am Extruder bzw. an der Spritzgießmaschine angebrachten Temperatursensoren, gemessen wurden, kann mit Hilfe eines Brechungsindexmodells, wie in Fig. 4b dargestellt, die stoffliche Zusammensetzung des zu extrudierenden Kunststoffmaterials ermittelt werden.

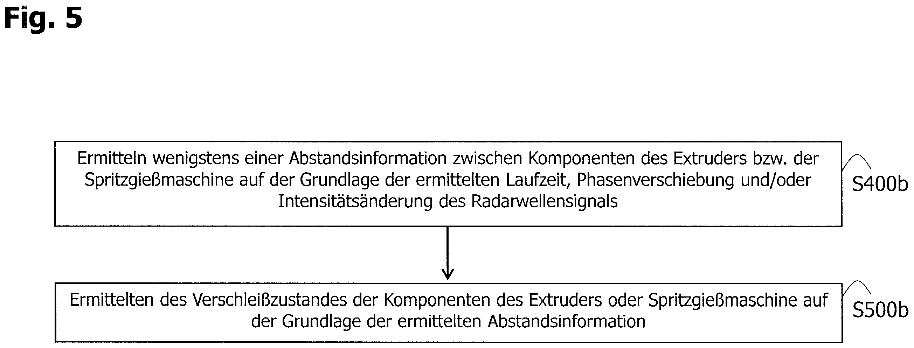

In Zusammenhang mit Fig. 5 wird eine weitere Implementierung einer Ermittlung eines Betriebsparameters (Verfahrensschritt S400 in Fig. 3) beschrieben. Bei dieser Implementierung wird der Verschleißzustand des Extruders 10 bzw. der Spritzgießmaschine ermittelt. Gemäß einem ersten Schritt S400b wird mit Hilfe der Recheneinheit 142 auf der Grundlage der ermittelten Laufzeit *Δt*, Phasenverschiebung Δφ und/oder Intensitätsänderung *ΔI* des Radarwellensignals wenigstens eine Abstandsinformation zwischen Komponenten des Extruders bzw. der Spritzgießmaschine ermittelt. Beispielsweise kann bei dem in Fig. 2 gezeigten Extruder 10 der Abstand D zwischen der Extruderschnecke 16 und dem Gehäuse 14 ermittelt werden. Dieser Abstand kann leicht aus der ermittelten Signallaufzeit Δt des Radarwellensignals bestimmt werden, da diese proportional zum zurückgelegten Weg Δs des Radarwellensignals gemäß der Beziehung Δt = n^{∗}Δs/*Cv* ist. Ist der Brechungsindex n des zu extrudierenden Kunststoffmaterials *n*, so kann der zurückgelegte Weg Δs direkt aus der gemessenen Signallaufzeit Δt ermittelt werden. In der in Fig. 2 dargestellten Implementierung der Messeinrichtung 100, bei der das von der Schnecke 16 reflektierte Radarwellensignal als Responsesignal gemessen werden kann, ist der Abstand zwischen Schnecke 16 und Extrudergehäuse 12 gerade die Hälfte des gemessenen Signalweges, also 0.5^{∗}Δs = D.

Aus dem ermittelten Abstand D (Abstandsänderungen) kann in einem weiteren Schritt S500b der Verschleiß der Schnecke 16 abgeschätzt werden.

Die in Zusammenhang mit Fig. 5 beschriebene Ermittlung des Verschleißes kann insbesondere auch bei entleertem Extruder oder außerhalb des Extruderbetriebs durchgeführt werden.

Die hier beschriebene Technik ermöglicht auf flexible und einfache Weise die Bestimmung der stofflichen Zusammensetzung sowie des Aufschmelzzustands eines zu extrudierenden Materials. Insbesondere kann das Verfahren auch zur Verschleißbestimmung von Extruderkomponenten eingesetzt werden. Da die elektromagnetischen Radarwellen nicht von den Temperaturverhältnissen im Extruder oder in der Spritzgießmaschine abhängen, handelt es sich bei der vorliegenden Erfindung um eine von Temperatureinflüssen entkoppelte Überwachungstechnik. Ferner kann die Technik in jedem beliebigen Extruder oder Spritzgießmaschine eingesetzt werden. Denkbar ist auch die Einsetzung der Technik im Spritzwerkzeug einer Spritzgießmaschine, um beispielsweise den Abkühlphase der erzeugten Formteile zu überwachen.

## Patentansprüche

1. Verfahren zum Überwachen eines im Betrieb befindlichen Extruders (10) oder einer im Betrieb befindlichen Spritzgießmaschine, wobei das Verfahren folgende Schritte umfasst:
Abstrahlen (S10) eines Radarwellensignals im Extruder (10) oder in der Spritzgießmaschine;
Detektieren (S20) eines dem abgestrahlten Radarwellensignal korrespondierenden Responsesignals;
Ermitteln (S30) einer Laufzeit Δt, Phasenverschiebung Δϕ und/oder Intensitätsänderung ΔI des Radarwellensignals auf der Grundlage des detektierten Responsesignals; und
Ermitteln (S40) wenigstens eines Betriebsparameters auf der Grundlage der ermittelten Laufzeit Δt, Phasenverschiebung Δϕ und/oder Intensitätsänderung ΔI des Radarwellensignals, wobei der Betriebsparameter auf einen Verschleißzustand des Extruders (10) oder der Spritzgießmaschine, auf einen Aufschmelzzustand und/oder auf eine stoffliche Zusammensetzung eines im Extruder (10) oder in der Spritzgießmaschine aufgenommenen und zu verarbeitenden Materials hinweist, wobei mit dem Aufschmelzzustand das Verhältnis von fester zu flüssiger Phase des aufgenommenen und zu verarbeitenden Materials gemeint ist.

2. Verfahren nach Anspruch 1, wobei das Radarwellensignal im Extruder (10) oder in der Spritzgießmaschine an mehreren, in axialer Richtung und/oder radialer Richtung voneinander beabstandet angeordneten Positionen abgestrahlt wird, und wobei für jede Position das Responsesignal detektiert und auf der Grundlage des Responsesignals ein Betriebsparameter ermittelt wird.

3. Verfahren nach Anspruch 1 oder 2, wobei als Responsesignal ein Reflexionsanteil oder ein Transmissionsanteil des eingestrahlten Radarwellensignals detektiert wird.

4. Verfahren nach einem der vorhergehenden Ansprüche, wobei das Radarwellensignal in einem vorgegeben Winkel zu einer Extrusionsrichtung abgestrahlt wird.

5. Verfahren nach einem der vorhergehenden Ansprüche, wobei das Radarwellensignal ein kontinuierliches oder gepulstes Radarsignal ist.

6. Verfahren nach einem der vorhergehenden Ansprüche, wobei das abgestrahlte Radarwellensignal wenigstens eine Frequenz im Bereich zwischen 30 GHZ und 300 GHZ aufweist.

7. Verfahren nach einem der vorhergehenden Ansprüche, wobei als Betriebsparameter der Brechungsindex n des zu verarbeitenden Materials aus der ermittelten Laufzeit Δt, Phasenverschiebung Δϕ und/oder Intensitätsänderung ΔI ermittelt wird.

8. Verfahren nach Anspruch 7, wobei aus dem ermittelten Brechungsindex n mit Hilfe wenigstens eines Brechungsindexmodells die stoffliche Zusammensetzung und/oder der Phasenzustand des zu verarbeitenden Materials ermittelt wird.

9. Verfahren nach einem der vorhergehenden Ansprüche, wobei als Betriebsparameter eine Abstandsinformation *D* aus der ermittelten Laufzeit Δt, Phasenverschiebung Δϕ und/oder Intensitätsänderung ΔI ermittelt wird.

10. Verfahren nach Anspruch 9, wobei aus der Abstandsinformation *D* mit Hilfe eines den Extruder (10) oder die Spritzgießmaschine beschreibenden Modells der Verschleißzustand des Extruders (10) oder der Spritzgießmaschine ermittelt wird.

11. Messsystem (100), das zur Überwachung eines Extruders (10) oder einer Spritzgießmaschine im Betrieb ausgebildet ist, umfassend:
eine Messeinrichtung (120), die dazu ausgebildet ist, ein Radarwellensignal zu erzeugen und im Extruder (10) oder in der Spritzgießmaschine abzustrahlen, sowie ein dem abgestrahlten Radarwellensignal korrespondierendes Responsesignal zu detektieren; und
eine Auswerteeinrichtung (140), die dazu ausgebildet ist, eine Laufzeit Δt, Phasenverschiebung Δϕ und/oder Intensitätsänderung ΔI des Radarwellensignals auf der Grundlage des detektierten Responsesignals zu ermitteln, und wenigstens einen Betriebsparameter des Extruders (10) oder der Spritzgießmaschine auf der Grundlage der ermittelten Laufzeit Δt, Phasenverschiebung Δϕ und/oder Intensitätsänderung ΔI des Radarwellensignals, zu ermitteln,
wobei der Betriebsparameter auf einen Verschleißzustand des Extruders (10) oder der Spritzgießmaschine, auf einen Aufschmelzzustand und/oder auf eine stoffliche Zusammensetzung eines im Extruder (10) oder in der Spritzgießmaschine aufgenommenen und zu verarbeitenden Materials hinweist, wobei mit dem Aufschmelzzustand das Verhältnis von fester zu flüssiger Phase des aufgenommenen und zu verarbeitenden Materials gemeint ist.

12. Messsystem (100) nach Anspruch 11, wobei die Messeinrichtung (120) wenigstens einen Sender zur Erzeugung des wenigstens einen Radarwellensignals an der wenigstens einen Messposition und wenigstens einen Empfänger zum Detektieren eines dem Radarwellensignal korrespondierenden Responsesignals umfasst.

13. Messsystem (100) nach Anspruch 11 oder 12, wobei die Messeinrichtung (120) dazu ausgebildet ist, Radarwellen im Bereich zwischen 30 GHZ bis 300 GHZ abzustrahlen und zu detektieren.

14. Messsystem (100) nach einem der Ansprüche 11 bis 13, wobei die Auswerteeinrichtung (140) dazu ausgebildet ist, auf der Grundlage der erfassten Laufzeit Δt, Phasenverschiebung Δϕ und/oder Intensitätsänderung ΔI einen Brechungsindex des im Extruder (10) oder in der Spritzgießmaschine aufgenommenen und zu verarbeitenden Materials zu ermitteln, und mit Hilfe eines vorgegebenen Brechungsindexmodells den Phasenzustand und/oder die stoffliche Zusammensetzung des Materials zu ermitteln.

15. Messsystem (100) nach einem der Ansprüche 11 bis 14, wobei die Auswerteeinrichtung (140) dazu ausgebildet ist, auf der Grundlage der erfassten Laufzeit Δt, Phasenverschiebung Δϕ und/oder Intensitätsänderung ΔI Abstände zwischen Komponenten des Extruders (10) oder der Spritzgießmaschine zu ermitteln, und mit Hilfe eines vorgegebenen Modells den Verschleißzustand des Extruders (10) oder der Spritzgießmaschine zu ermitteln.

16. Messsystem (100) nach einem der vorhergehenden Ansprüche, ferner umfassend eine Speichereinrichtung, die dazu ausgebildet ist, wenigstens ein Brechungsindexmodell und/oder ein den Extruder (10) oder die Spritzgießmaschine beschreibendes Modell oder Parameter zu speichern.

17. Extruder (10), umfassend das Messsystem (100) nach einen der Ansprüche 11 bis 16.

18. Spritzgießmaschine, umfassend das Messsystem (100) nach einen der Ansprüche 11 bis 16.

## Claims

1. A method for monitoring an extruder (10) which is in operation or an injection moulding machine which is in operation, wherein the method comprises the following steps:
emitting (S10) a radar wave signal in the extruder (10) or in the injection moulding machine;
detecting (S20) a response signal corresponding to the emitted radar wave signal;
determining (S30) a run time Δt, phase shift Δϕ and/or intensity change ΔI of the radar wave signal on the basis of the detected response signal; and
determining (S40) at least one operating parameter on the basis of the determined run time Δt, phase shift Δϕ and/or intensity change AI of the radar wave signal, wherein the operating parameter points to a wear state of the extruder (10) or of the injection moulding machine, a melting state and/or a material composition of a material which is received in the extruder (10) or in the injection moulding machine and which is to be processed, wherein the melting state means the ratio of solid to liquid phase of the material which is received and is to be processed.

2. The method according to Claim 1, wherein the radar wave signal in the extruder (10) or in the injection moulding machine is emitted at several positions arranged spaced apart from one another in axial direction and/or radial direction, and wherein for each position the response signal is detected and an operating parameter is determined on the basis of the response signal.

3. The method according to Claim 1 or 2, wherein as response signal a reflection component or a transmission component of the irradiated radar wave signal is detected.

4. The method according to one of the preceding claims, wherein the radar wave signal is emitted at a predetermined angle to an extrusion direction.

5. The method according to one of the preceding claims, wherein the radar wave signal is a continuous or pulsed radar signal.

6. The method according to one of the preceding claims, wherein the emitted radar wave signal has at least a frequency in the range between 30 GHZ and 300 GHZ.

7. The method according to one of the preceding claims, wherein as operating parameter the refraction index n of the material which is to be processed is determined from the determined run time Δt, phase shift Δϕ and/or intensity change AI.

8. The method according to Claim 7, wherein from the determined refraction index n by means of at least one refraction index model the material composition and/or the phase state of the material which is to be processed is determined.

9. The method according to one of the preceding claims, wherein as operating parameter a distance datum D is determined from the determined run time Δt, phase shift Δϕ and/or intensity change ΔI.

10. The method according to Claim 9, wherein from the distance datum D by means of a model describing the extruder (10) or the injection moulding machine, the wear state of the extruder (10) or of the injection moulding machine is determined.

11. A measurement system (100), which is designated for monitoring an extruder (10) or an injection moulding machine in operation, comprising:
a measurement device (120) which is designed to generate a radar wave signal and to emit it in the extruder (10) or in the injection moulding machine,
and to detect a response signal corresponding to the emitted radar wave signal; and
an evaluation device (140), which is designed to determine a run time Δt, phase shift Δϕ and/or
intensity change ΔI of the radar wave signal on the basis of the detected response signal and to determine at least one operating parameter of the extruder (10) or of the injection moulding machine on the basis of the determined run time Δt, phase shift Δϕ and/or intensity change ΔI of the radar wave signal,
wherein the operating parameter points to a wear state of the extruder (10) or of the injection moulding machine, to a melting state and/or to a material composition of a material which is received in the extruder (10) or in the injection moulding machine and
which is to be processed, wherein the melting state means the ratio of solid to liquid phase of the material which is received and is to be processed.

12. The measurement system (100) according to Claim 11, wherein the measurement device (120) comprises at least one transmitter for generating the at least one radar wave signal at the at least one measurement position, and at least one receiver for detecting a response signal corresponding to the radar wave signal.

13. The measurement system (100) according to Claim 11 or 12, wherein the measurement device (120) is designed to emit and detect radar waves in the range between 30 GHZ to 300 GHZ.

14. The measurement system (100) according to one of Claims 11 to 13, wherein the evaluation device (140) is designed to determine a refraction index of the material which is received in the extruder (10) or in the injection moulding machine and which is to be processed, on the basis of the detected run time Δt, phase shift Δϕ and/or intensity change ΔI, and to determine the phase state and/or the material composition of the material by means of a predetermined refraction index model.

15. The measurement system (100) according to one of Claims 11 to 14, wherein the evaluation device (140) is designed to determine distances between components of the extruder (10) or of the injection moulding machine on the basis of the detected run time Δt, phase shift Δϕ and/or intensity change ΔI, and to determine the wear state of the extruder (10) or of the injection moulding machine by means of a predetermined model.

16. The measurement system (100) according to one of the preceding claims, further comprising a memory device, which is designed to store at least one refraction index model and/or a model describing the extruder (10) or the injection moulding machine, or parameters.

17. An extruder (10), comprising the measurement system (100) according to one of Claims 11 to 16.

18. An injection moulding machine, comprising the measurement system (100) according to one of Claims 11 to 16.

## Revendications

1. Procédé pour surveiller une extrudeuse (10) se trouvant en fonctionnement ou une machine de moulage par injection se trouvant en fonctionnement, dans lequel le procédé comprend les étapes suivantes :
émission (S10) d'un signal d'ondes radar dans l'extrudeuse (10) ou dans la machine de moulage par injection ;
détection (S20) d'un signal de réponse correspondant au signal d'ondes radar émis ;
détermination (S30) d'une durée de vie Δt, d'un décalage de phase Δϕ et/ou d'un changement d'intensité ΔI du signal d'ondes radar en se basant sur le signal de réponse détecté ; et
détermination (S40) d'au moins un paramètre fonctionnel en se basant sur la durée de vie Δt, le décalage de phase Δϕ et/ou le changement d'intensité ΔI déterminé(e) du signal d'ondes radar, dans lequel le paramètre fonctionnel indique un état d'usure de l'extrudeuse (10) ou de la machine de moulage par injection, un état de fusion et/ou une composition de substance d'un matériau reçu et à traiter dans l'extrudeuse (10) ou dans la machine de moulage par injection, dans lequel par l'état de fusion, on entend le rapport de la phase solide à la phase liquide du matériau reçu et à traiter.

2. Procédé selon la revendication 1, dans lequel le signal d'ondes radar dans l'extrudeuse (10) ou dans la machine de moulage par injection est émis en plusieurs positions distantes l'une de l'autre dans le sens axial et/ou dans le sens radial, et dans lequel pour chaque position, le signal de réponse est détecté pour chaque position et un paramètre fonctionnel est déterminé en se basant sur le signal de réponse.

3. Procédé selon la revendication 1 ou 2, dans lequel une part de réfléchissement ou une part de transmission du signal d'ondes radar émis est détectée en tant que signal de réponse.

4. Procédé selon l'une des revendications précédentes, dans lequel le signal d'ondes radar est émis dans un angle prédéfini par rapport à un sens d'extrusion.

5. Procédé selon l'une des revendications précédentes, dans lequel le signal d'ondes radar est un signal radar continu ou pulsé.

6. Procédé selon l'une des revendications précédentes, dans lequel le signal d'ondes radar émis présente au moins une fréquence dans la plage entre 30 GHZ et 300 GHZ.

7. Procédé selon l'une des revendications précédentes, dans lequel l'indice de réfraction n du matériau à traiter est déterminé en tant que paramètre fonctionnel à partir de la durée de vie Δt, du décalage de phase Δϕ et/ou du changement d'intensité AI déterminé(e).

8. Procédé selon la revendication 7, dans lequel à partir de l'indice de réfraction n déterminé, la composition de substance et/ou l'état de phase du matériau à traiter est déterminé(e) à l'aide d'au moins un modèle d'indice de réfraction.

9. Procédé selon l'une des revendications précédentes, dans lequel une information de distance D est déterminée en tant que paramètre fonctionnel à partir de la durée de vie Δt, du décalage de phase Δϕ et/ou du changement d'intensité ΔI déterminé(e).

10. Procédé selon la revendication 9, dans lequel à partir de l'information de distance D, l'état d'usure de l'extrudeuse (10) ou de la machine de moulage par injection est déterminé à l'aide d'un modèle décrivant l'extrudeuse (10) ou la machine de moulage par injection.

11. Système de mesure (100) qui est conçu pour surveiller une extrudeuse (10) ou une machine de moulage par injection en fonctionnement, comprenant :
un dispositif de mesure (120) qui est conçu pour produire et émettre un signal d'ondes radar dans l'extrudeuse (10) ou dans la machine de moulage par injection, ainsi que pour détecter un signal de réponse correspondant au signal d'ondes radar émis ;
un dispositif d'évaluation (140) qui est conçu pour déterminer une durée de vie Δt, un décalage de phase Δϕ et/ou un changement d'intensité ΔI du signal d'ondes radar en se basant sur le signal de réponse détecté, et pour déterminer au moins un paramètre fonctionnel de l'extrudeuse (10) ou de la machine de moulage par injection en se basant sur la durée de vie Δt, le décalage de phase Δϕ et/ou le changement d'intensité ΔI déterminé(e) du signal d'ondes radar, dans lequel le paramètre fonctionnel indique un état d'usure de l'extrudeuse (10) ou de la machine de moulage par injection, un état de fusion et/ou une composition de substance d'un matériau reçu et à traiter dans l'extrudeuse (10) ou dans la machine de moulage par injection, dans lequel par l'état de fusion, on entend le rapport de la phase solide à la phase liquide du matériau reçu et à traiter.

12. Système de mesure (100) selon la revendication 11, dans lequel le dispositif de mesure (120) comprend au moins un émetteur pour produire l'au moins un signal d'ondes radar sur l'au moins une position de mesure et au moins un récepteur pour détecter un signal de réponse correspondant au signal d'ondes radar.

13. Système de mesure (100) selon la revendication 11 ou 12, dans lequel le dispositif de mesure (120) est conçu pour émettre et détecter des ondes radar dans la plage entre 30 GHZ et 300 GHZ.

14. Système de mesure (100) selon l'une des revendications 11 à 13, dans lequel le dispositif d'évaluation (140) est conçu pour déterminer, en se basant sur la durée de vie Δt, le décalage de phase Δϕ et/ou le changement d'intensité ΔI du signal d'ondes radar détecté(s), un indice de réfraction du matériau reçu et à traiter dans l'extrudeuse (10) ou dans la machine de moulage par injection, et à l'aide d'un modèle d'indice de réfraction prédéfini, pour déterminer la composition de substance et/ou l'état de phase du matériau à traiter.

15. Système de mesure (100) selon l'une des revendications 11 à 14, dans lequel le dispositif d'évaluation (140) est conçu pour déterminer, en se basant sur la durée de vie Δt, le décalage de phase Δϕ et/ou le changement d'intensité ΔI du signal d'ondes radar détecté(s), des distances entre des composantes de l'extrudeuse (10) ou de la machine de moulage par injection, et à l'aide d'un modèle prédéfini, pour déterminer l'état d'usure de l'extrudeuse (10) ou de la machine de moulage par injection.

16. Système de mesure (100) selon l'une des revendications précédentes, comprenant en outre un dispositif d'alimentation qui est conçu pour enregistrer au moins un modèle d'indice de réfraction et/ou un modèle ou un paramètre décrivant l'extrudeuse (10) ou la machine de moulage par injection.

17. Extrudeuse (10), comprenant le système de mesure (100) selon l'une des revendications 11 à 16.

18. Machine de moulage par injection, comprenant le système de mesure (100) selon l'une des revendications 11 à 16.
